# EUROPEAN PATENT APPLICATION

(11) **EP 4 787 197 A1**
(43) Date of publication of application: **05.08.2026**
(21) Application number: 24870443.9
(22) Date of filing: 11.09.2024
(51) Int. Cl.: G06F 16/958

(54) **MEDIA GENERATION METHOD AND APPARATUS, AND ELECTRONIC DEVICE AND MEDIUM**

(30) Priority: 27.09.2023 CN 202311268428
(71) Applicant: Beijing Zitiao Network Technology Co., Ltd., Beijing 100190 (CN)
(72) Inventor: WANG, Jinkai, Beijing 100028 (CN); YU, Tianyuan, Beijing 100028 (CN); ZHANG, Xiang, Beijing 100028 (CN); LUO, Min, Beijing 100028 (CN)
(74) Representative: Isarpatent
(86) International application number: PCT/CN2024/118199
(87) International publication number: WO 2025/066899

(57) **Abstract**

Embodiments of the present disclosure relate to a media generation method, an apparatus, an electronic device, and a medium. The method includes presenting, on a first interface including a map, a trip including a plurality of nodes, where each of the plurality of nodes is associated with a corresponding node location, node time, and/or creation content, the creation content including an image, an audio, and/or a video. The method further includes displaying first creation content corresponding to a first node of the plurality of nodes in response to a user selecting the first node.

## Description

### CROSS-REFERENCE TO RELATED APPLICATION(S)

The present application claims priority to Chinese Patent Application No. 202311268428.X, filed on September 27, 2023 and entitled "MEDIA GENERATION METHOD AND APPARATUS, AND ELECTRONIC DEVICE AND MEDIUM", which is hereby incorporated by reference in its entirety.

### TECHNICAL FIELD

Embodiments of the present disclosure relate to the field of computers, and more particularly, to a media generation method, an apparatus, an electronic device, and a medium.

### BACKGROUND

At present, in the publishing ecosystem of social platforms, creation related to trips is a very important vertical category, and trips include travel trips, business trips, urban walking trips, and the like. Experience sharing in trips has always been an important component of platform content, and users usually search for and view trips published by other users on social platforms when planning trips. In traditional trips, trips presented in the form of a combination of videos, images, and texts account for a large proportion.

When viewing a trip, the user needs to first digest the text information in the guide, and then search for the corresponding content in the video or image after understanding the text information, that is, the user needs to repeatedly compare the images, audio, and/or video with the text information when viewing the trip. The discreteness of images, videos, and text information renders the trip not intuitive enough, and the user cannot read smoothly.

### SUMMARY

Embodiments of the present disclosure provide a media generation method, an apparatus, an electronic device, and a medium.

According to a first aspect of the present disclosure, there is provided a media generation method. The method includes presenting, on a first interface including a map, a trip including a plurality of nodes, the trip being presented on the map, each of the plurality of nodes being associated with a corresponding node location, node time, and/or creation content, the creation content including an image, an audio, and/or a video; and displaying first creation content corresponding to a first node of the plurality of nodes in response to a user selecting the first node.

In a second aspect of the present disclosure, there is provided a media display apparatus. The apparatus includes a trip display module configured to present, on a first interface including a map, a trip including a plurality of nodes, the trip being presented on the map, each of the plurality of nodes being associated with a corresponding node location, node time, and/or creation content, the creation content including an image, an audio, and/or a video; and a first creation content display module configured to display first creation content corresponding to a first node of the plurality of nodes in response to a user selecting the first node.

According to a third aspect of the present disclosure, there is provided an electronic device. The electronic device includes a processor and a memory coupled with the processor, the memory having instructions stored therein, the instructions, when executed by the processor, causing the electronic device to perform the method of the first aspect.

In a fourth aspect of the present disclosure, there is provided a computer-readable storage medium. The computer-readable storage medium has computer-executable instructions stored thereon, where the computer-executable instructions are executed by a processor to implement the method of the first aspect.

The Summary is provided to introduce a selection of concepts in a simplified form, which will be further described below in the Detailed Description. The contents described in the Summary are not intended to identify key features or essential features of the embodiments of the present disclosure, nor is it intended to limit the scope of the present disclosure.

### BRIEF DESCRIPTION OF THE DRAWINGS

The above and other features, advantages, and aspects of the embodiments of the present disclosure will become more apparent in combination with the drawings and with reference to the following detailed description. In the drawings, the same or similar reference numerals represent the same or similar elements, where:
Fig. 1 shows a schematic diagram of an example environment in which a media generation method according to some embodiments of the present disclosure may be implemented;
Fig. 2 shows a flowchart of a media generation method according to some embodiments of the present disclosure;
Fig. 3 shows a schematic diagram of a process of adding a trip according to some embodiments of the present disclosure;
Fig. 4 shows a schematic diagram of a process of adding or deleting a node according to some embodiments of the present disclosure;
Fig. 5 shows a schematic diagram of a process of editing creation content according to some embodiments of the present disclosure;
Fig. 6A shows a flowchart of a trip display method according to some embodiments of the present disclosure;
Fig. 6B shows a schematic diagram of an example environment in which a trip display method according to some embodiments of the present disclosure may be implemented;
Fig. 7 shows a block diagram of a media generation apparatus according to some embodiments of the present disclosure; and
Fig. 8 shows a block diagram of an electronic device according to some embodiments of the present disclosure.

Throughout the drawings, the same or similar reference numerals represent the same or similar elements.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms, and should not be construed as being limited to the embodiments set forth herein. Instead, these embodiments are provided for a more thorough and complete understanding of the present disclosure. It should be understood that the drawings and embodiments of the present disclosure are only for exemplary purposes, and are not intended to limit the protection scope of the present disclosure.

In the description of the embodiments of the present disclosure, the term "include/comprise" and similar terms should be understood as open-ended inclusions, that is, "include/comprise but not limited to". The term "based on" should be understood as "at least partially based on". The term "one embodiment" or "the embodiment" should be understood as "at least one embodiment". The terms "first", "second", and the like may refer to different or same objects, unless explicitly stated. Other definitions, either explicit or implicit, may also be included below.

On social platforms, trips usually consist of three parts: videos, images, and text information, and for example, travel trips usually contain a plurality of images, and the shooting location and expressed information of each image may be different. Similarly, a video usually includes a plurality of frames, and each frame of image may also present different content and is shot at different locations. However, in traditional trips, images or videos are usually presented on the same interface as text information, and a simple combination and presentation manner renders the association between images and texts or between videos and texts poor, and information is discretized.

When viewing a travel trip published on a platform, the user needs to first understand the meaning expressed by the text information, and then slide through the images or search for the content corresponding to the text information in the video. For example, the text information includes "a one-day trip to Beijing", and after knowing that the travel location is Beijing, the user searches for images related to "Beijing" in the images and videos. The text information and the images, audio, and/or video cannot be described coherently, and the user needs to perform secondary processing to understand the real scene corresponding to the trip, but the reading behavior is continuous, and with the above solution, the user needs to repeatedly compare the images, audio, and/or video with the text information when viewing the travel trip, and cannot read smoothly.

To solve the above problem, embodiments of the present disclosure provide a media generation solution. The trip in this solution includes a plurality of nodes, where the nodes may be map points, places, or waypoints displayed on a map. A node location and a node time are displayed near each node, the node location may be a certain location in the trip of the user, and the node time may be the time when the user arrives at the node location. When viewing the trip, the user may know the route of the trip through the nodes connected in series. In addition, in the solution of the present disclosure, text information and an image, an audio, and/or a video that correspond to each other are attributed to the same node, so that the text information and the image, audio, and/or video are mapped point to point. After the user selects a node, the user may view the text information and the image, audio, and/or video that correspond to the selected node, thereby reducing the time cost of reading. According to the embodiments of the present disclosure, when viewing a published trip as a reference, the user may also extract routes on the trip and recombine them to create an exclusive trip.

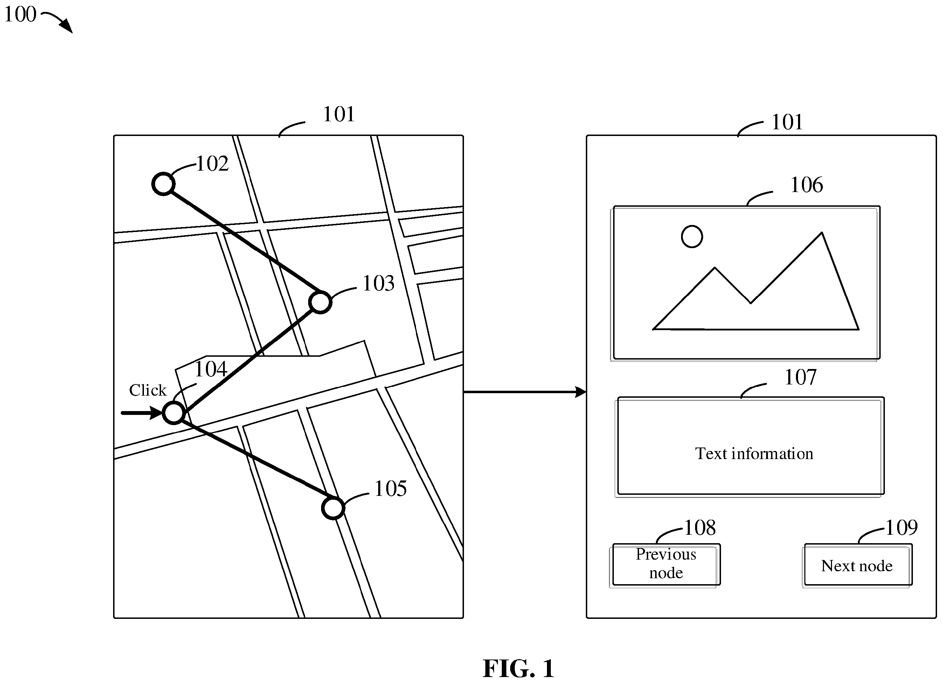

Fig. 1 shows a schematic diagram of an example environment 100 in which a media generation method according to some embodiments of the present disclosure may be implemented. As shown in Fig. 1, the example environment 100 may include a user interface 101, which may be a touch screen display, and the user may input commands to a client by touching and/or making gestures on the display screen. In some embodiments, a trip may be displayed on the user interface 101, and the trip includes a first node 102, a second node 103, a third node 104, and a fourth node 105. A place and a time are displayed near each node, and the nodes are connected in series according to the chronological order to obtain a trip route. A connection line between two adjacent nodes is a part of the trip route. The background of the trip route is a map, and the combination of the route and the map forms a route map. In the present disclosure, the route map is used as the display page of the trip, and the user may intuitively view the route of the trip, that is, what place the user has been to at what time.

In some embodiments, the trip may be "a one-day trip to Beijing". Therefore, the place displayed near the first node 102 may be the "Summer Palace", the place displayed near the second node 103 may be the "Old Summer Palace", the place displayed near the third node 104 may be the "Forbidden City", and the place displayed near the fourth node 105 may be "Badaling". The four nodes are connected in series according to the time sequence of each node, and the route of the "one-day trip to Beijing" may be obtained.

Referring to Fig. 1, when viewing the route map, the user may select a node of interest or a node that the user wants to know about, to enter the display interface of creation content. In some embodiments, when the user clicks on the third node 104, the route map on the user interface 101 is switched to the creation content corresponding to the third node 104. The creation content may include an image, an audio, and/or a video 106, and text information 107, where the image, audio, and/or video 106 corresponds to the text information 107. The user directly views the corresponding image, audio, and/or video 106 and the text information 107 by clicking on the third node 104, thereby eliminating the step of repeated comparison and saving the time cost of reading.

In some embodiments, the place displayed near the third node 104 may be the "Forbidden City", and the creation content corresponding to the third node 104 may be images, audio, and/or video of the Forbidden City, and text information created by the user. After the user clicks on the third node 104, the user interface 101 displays the images, audio, and/or video of the Forbidden City, and the text information, and the text information may be "a happy trip to the Forbidden City". In addition, when there are a plurality of images, audio, and/or video, the user may also view different images, audio, and/or video by sliding the corresponding position of the images, audio, and/or video.

In some embodiments, the user interface 101 may further display a previous node control 108, a next node control 109, and a return control 110 on the interface for displaying the creation content. The user may view the creation content corresponding to the second node 103 through a touch operation on the previous node control 108, view the creation content corresponding to the fourth node 104 through a touch operation on the next node control 109, and return to the interface of the route map through a touch operation on the return control 110.

As may be seen from the above description, in the solution of the present disclosure, a trip including a plurality of nodes is displayed on a map, and the user may intuitively view the trip route displayed on the map. In addition, text information and an image, an audio, and/or a video that correspond to each other are attributed to the same node, and the user may view the creation content corresponding to a selected node of the trip by selecting the node, without repeated comparison, thereby reducing the time cost of the user for viewing, reading, and planning an exclusive trip.

It should be understood that the architecture and functions in the example environment 100 are described for illustrative purposes only, without suggesting any limitation to the scope of the present disclosure. The embodiments of the present disclosure may also be applied to other environments with different structures and/or functions.

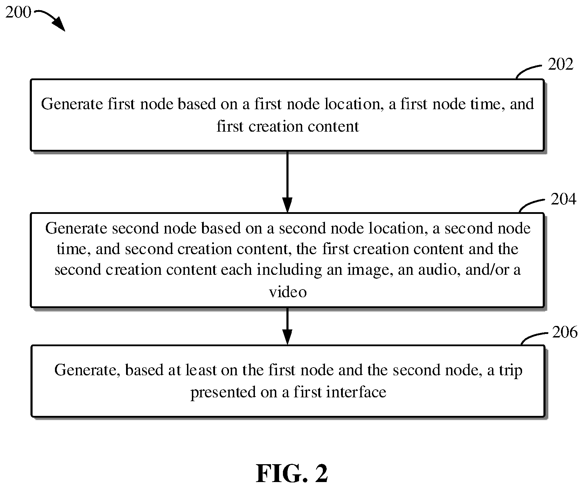

The process of the embodiments of the present disclosure will be described in detail below with reference to Fig. 2 to Fig. 9. For ease of understanding, the specific data mentioned in the following description are exemplary and are not intended to limit the protection scope of the present disclosure. It should be understood that the embodiments described below may further include additional actions not shown and/or may omit the actions shown, and the scope of the present disclosure is not limited in this regard.

Fig. 2 shows a flowchart of a media generation method 200 according to some embodiments of the present disclosure. At a block 202, a first node is generated based on a first node location, a first node time, and first creation content. Generating the first node requires obtaining the first node location, the first node time, and the first creation content. In some embodiments, the first node location and the first node time may be a place and a time that are input by the user and received by the client, or may be directly obtained based on an image or a video imported by the user. For example, the user inputs an image shot in Beijing on June 1st, and the client may determine the first node location and the first node time based on the fact that the input image was shot in Beijing on June 1st. The first creation content may be an image, a video, text information, etc. that are input by the user and received by the client. The first node location and the first node time may be displayed near the first node, so that the user may intuitively view the route map. When the user selects the first node, the user interface 101 switches the route map to the interface of the first creation content, implementing a point-to-point mapping between the text information and the image, audio, and/or video, thereby enhancing the association of the content of the text information.

At a block 204, a second node is generated based on a second node location, a second node time, and second creation content, where the first creation content and the second creation content each include an image, an audio, and/or a video. In some embodiments, the second node location, the second node time, and the second creation content may be obtained by receiving a time, a place, and creation content input by the user. The second node location and the second node time may be displayed near the second node. When the user selects the second node, the user interface switches the route map to the interface of the second creation content. The method for generating the second node is consistent with the method for generating the first node, and details are not described herein again.

At a block 206, a trip presented on a first interface is generated based at least on the first node and the second node. The trip includes a route map and creation content, and the route on the route map may include a plurality of nodes. Certainly, it is also possible to provide only one node, which may be specifically selected according to actual needs. When the route includes a plurality of nodes, there are at least a first node and a second node, where the first node is the start point, and the second node is the end point. The first interface may be an interface including a map. For example, as shown in Fig. 1, the first interface may be the user interface 101 including the route map, and the first node and the second node are connected in series and displayed on the map to obtain the trip.

In this way, with the method 200 according to the embodiments of the present disclosure, when generating a trip, a plurality of nodes are determined, and corresponding text information and an image, an audio, and/or a video are attributed to the same node, to implement a point-to-point mapping between the text information and the image, audio, and/or video, thereby improving the association between the text information and the image, audio, and/or video, and facilitating the viewing by the user, and reducing the time cost of reading. In addition, the route map is used as the display page of the trip, and when viewing a published trip as a reference, the user may also extract routes on the trip and recombine them to create an exclusive trip.

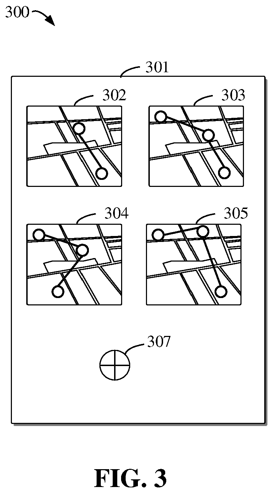

The process of trip generation will be specifically described below with reference to Fig. 3 to Fig. 5. In the embodiments of the present disclosure, description is made in sequence of adding a trip, adding or deleting a node, and generating creation content. The specific data mentioned in the following description are exemplary and are not intended to limit the protection scope of the present disclosure. It should be understood that the embodiments described below may further include additional actions not shown and/or may omit the actions shown, and the scope of the present disclosure is not limited in this regard.

Fig. 3 shows a schematic diagram of a process 300 of adding a trip according to some embodiments of the present disclosure. In some embodiments, the user may publish a plurality of trips on a second interface, and other users may view the trips by simply selecting the trips on the second interface. For example, Fig. 3 includes a user interface 301, a first trip 302, a third trip 303, a fourth trip 304, and a fifth trip 305 are displayed on the user interface 301, and the number and arrangement positions of the trips may be adjusted by the user according to actual needs. An add control 307 is further displayed on the user interface 301, and the user may add a trip through a touch operation on the add control 307. Certainly, a delete control, an up control, a down control, etc. may also be provided on the user interface 301, and the specific principle and method of setting are not described herein again.

In some embodiments, in order to provide the intersection of different people in a corresponding space and time, so as to create a travel social environment and increase travel interactivity, after the first trip 302 is published, the present disclosure determines whether the route of the first trip and the route of a second trip in a recommendation pool of a server have the same place at the same time. If the route of the first trip 302 and the route of the second trip have the same place at the same time, it indicates that the user who publishes the first trip 302 and the user who publishes the second trip will go to the same place at the same time, the second trip is recommended to the user who publishes the first trip 302, and the first trip 302 may also be recommended to the user who publishes the second trip at the same time, so as to increase the interactivity between the users on the platform and improve the user experience.

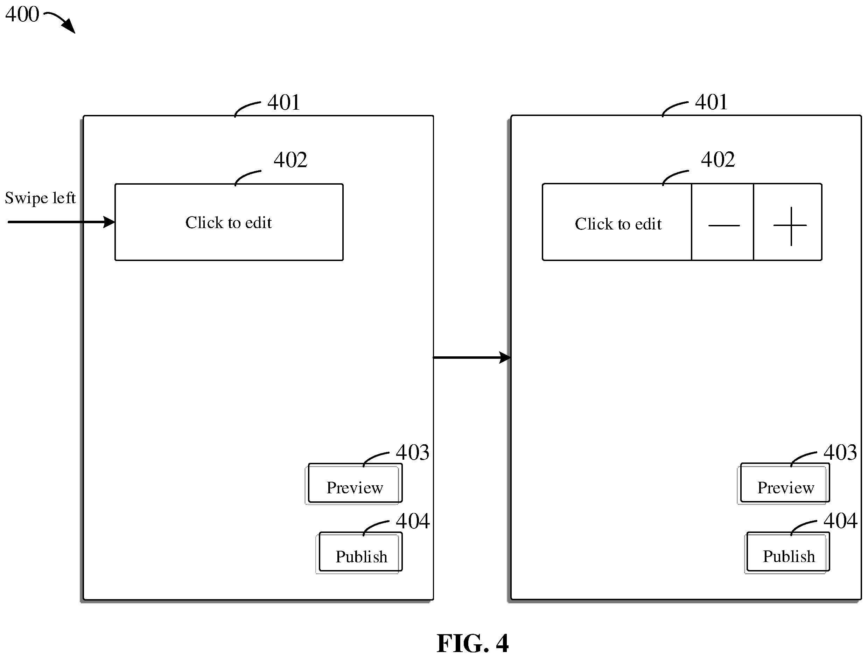

Fig. 4 shows a schematic diagram of a process 400 of adding or deleting a node according to some embodiments of the present disclosure. After the user performs a touch operation on the add control 307 in Fig. 3, the interface shown in Fig. 4 is displayed on a user interface 401. The user may click on an edit box 402 to input information required for generating a node. When the trip includes a plurality of nodes, the edit box 402 may be slid, a "+" control and a "-" control are displayed on the edit box 402 after sliding, the user may perform a touch operation on the "+" control to add a node, and perform a touch operation on the "-" control to delete a node. The user interface 401 is further provided with a preview box 403 and a publish box 404, and when generating a first draft of the trip, the user may perform a touch operation on the preview control 403 to preview the first draft of the trip. If the user needs to add or delete content, the user may return to modify the first draft, and if the user confirms that there is no error, the user may click on the publish box 404 to publish the trip to a social platform.

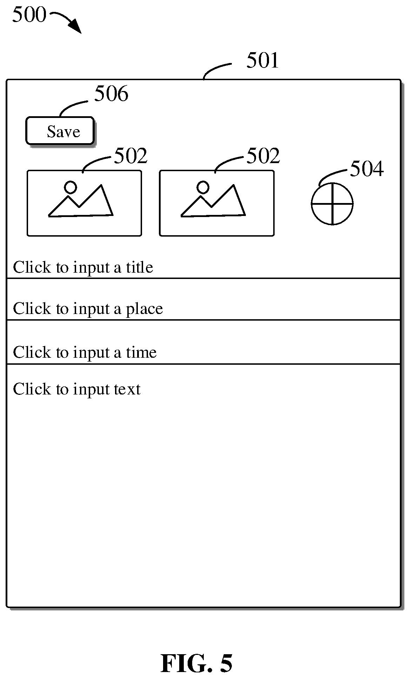

Fig. 5 shows a schematic diagram of a process 500 of generating creation content according to some embodiments of the present disclosure. After the user clicks on the edit box 402 in Fig. 4, the interface shown in Fig. 5 is displayed on a user interface 501. In some embodiments, an image, audio, and/or video add key 504 is displayed on the user interface 501, and the user may click on the add key 504 to add an image, an audio, and/or a video corresponding to the node, and the added image, audio, and/or video may be displayed at the position of a media box 502. The user may add only one image and/or one video, or may add a plurality of images and/or a plurality of videos, which may be specifically selected according to actual needs. When the number of added images, audio, and/or video is relatively large, the user may switch the images or videos displayed on the user interface 501 by sliding the media box 502.

In some embodiments, the creation content further includes a title and text information, and the user may respectively click on positions corresponding to the input title and the input text information on the user interface 501 to generate the creation content. After the creation content is generated, the user may perform a touch operation on a save control 506 to save the input creation content.

In some embodiments, the creation content may include a plurality of images and text information, may include a plurality of audio and/or video and text information, and may further include a plurality of images, a plurality of audio and/or video, and text information. The number and combination of images, audio, and/or video and text information may be selected by the user according to actual needs.

Prompts of "click to input a place" and "click to input a time" are further displayed on the user interface 501, and the user may input the location and time of the node by respectively clicking on the above prompts. Certainly, the location and time of the node may also be obtained by direct extraction based on an image or a video imported by the user (for example, through exchangeable image file format (EXIF) information). For example, the user inputs an image shot in Beijing on June 1st, and the client may determine the first node location and the first node time based on the fact that the input image was shot in Beijing on June 1st.

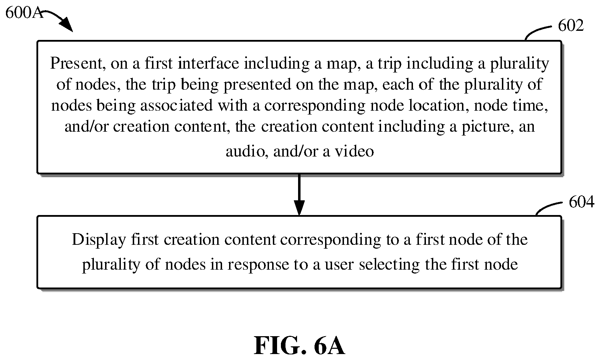

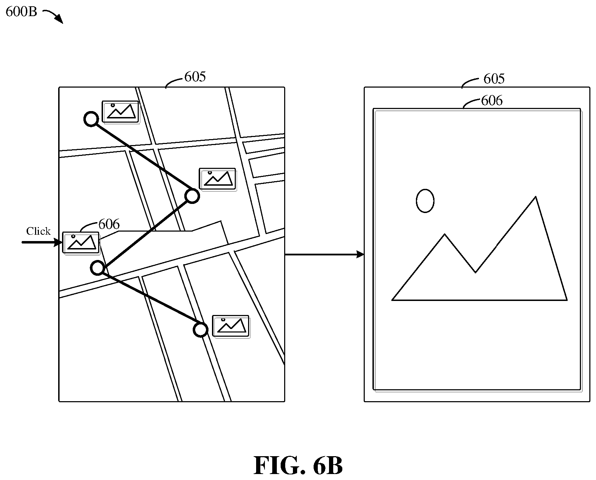

Fig. 6A shows a flowchart of a trip display method 600A according to some embodiments of the present disclosure, and Fig. 6B shows a schematic diagram of an example environment 600B in which the trip display method according to some embodiments of the present disclosure may be implemented. At a block 602, a trip including a plurality of nodes is presented on a first interface including a map, where the trip is presented on the map, each of the plurality of nodes is associated with a corresponding node location, node time, and/or creation content, the creation content includes an image, an audio, and/or a video. For example, as shown in Fig. 600B, the trip may be displayed on a user interface 605. In some embodiments, a place, a time, and a thumbnail associated with the creation content are displayed near each node. The thumbnail may be an image that may represent the node in the creation content associated with the node, the thumbnail may be an image included in the creation content, or may be an image captured from a video included in the creation content, and displaying the thumbnail near each node may enable the user to more intuitively view the trip.

When viewing the route map, the user may input commands by touch, gesture, voice, etc., and after receiving an adjustment command for the route map input by the user, the client adjusts the display of the route map, where the adjustment command includes a scaling command for scaling a partial area of the route map and a moving command for moving the route map. After the client receives the scaling command or the moving command, the user interface 605 displays the scaled or moved map, and after the map is moved or scaled, the node and the nearby thumbnail may also be moved or scaled accordingly, so as to facilitate the user to view the node that the user wants to view.

In some embodiments, the thumbnail displayed near the node may be a representative image or a representative video in the creation content. The representative image or the representative video may be an image or a video that may represent the node and that is automatically generated from the creation content input by the user, or may be an image or a video manually selected by the user. Displaying the image or the video on the periphery of the node may enable the user to know more information about the node, to make a choice.

At a block 604, first creation content corresponding to a first node of the plurality of nodes is displayed in response to a user selecting the first node. For example, as shown in Fig. 600B, when viewing the route map, the user may select a node of interest or a node that the user wants to know about, to enter the interface displaying the creation content. In some embodiments, the user clicks on a thumbnail 606, and the route map on the user interface 605 displays the original image or the original video of the thumbnail 606, so that the user may more clearly view the information contained in the node.

In the solution of the present disclosure, a trip including a plurality of nodes is displayed on a map, and the user may intuitively view the trip route displayed on the map. When viewing the trip route, the user may move or scale the map according to actual needs, and the nodes included in the trip route and the thumbnails near the nodes are moved or scaled with the map, so that the user may view more clearly. In addition, the user may also click on the thumbnail to view the original image or the original video of the thumbnail 606, to deeply understand the content expressed by the thumbnail 606, and determine whether the node corresponding to the thumbnail 606 is the node that the user needs to know about, further reducing the time cost for the user to view.

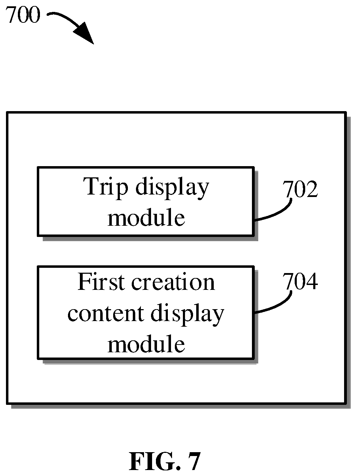

Fig. 7 shows a block diagram of a media generation apparatus 700 according to some embodiments of the present disclosure. As shown in Fig. 7, the apparatus 700 includes a trip display module and a first creation content display module. The trip display module is configured to present, on a first interface including a map, a trip including a plurality of nodes, the trip being presented on the map, each of the plurality of nodes being associated with a corresponding node location, node time, and/or creation content, the creation content including an image, an audio, and/or a video; and the first creation content display module is configured to display first creation content corresponding to a first node of the plurality of nodes in response to a user selecting the first node.

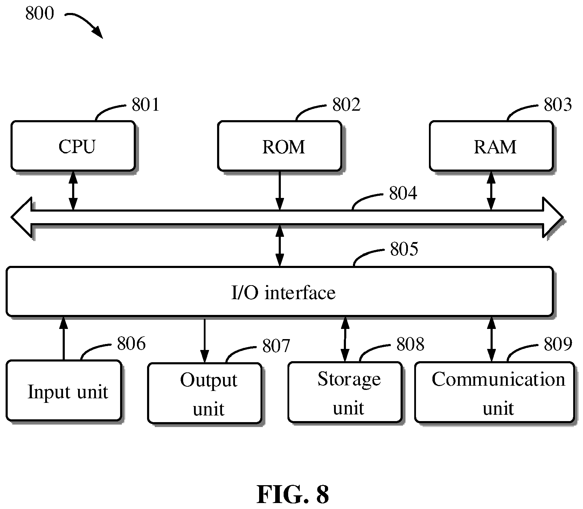

Fig. 8 shows a block diagram of an electronic device 800 according to some embodiments of the present disclosure, and the device 800 may be the device or apparatus described in the embodiments of the present disclosure. As shown in Fig. 8, the device 800 includes a central processing unit (CPU) and/or a graphics processing unit (GPU) 801, which may perform various appropriate actions and processing based on computer program instructions stored in a read-only memory (ROM) 802 or computer program instructions loaded from a storage unit 808 into a random access memory (RAM) 803. The RAM 803 may further store various programs and data required for the operation of the device 800. The CPU and/or GPU 801, the ROM 802, and the RAM 803 are connected to each other through a bus 804. An input and/or output (I and/or O) interface 805 is also connected to the bus 804. Although not shown in Fig. 8, the device 800 may further include a coprocessor.

A plurality of components in the device 800 are connected to the I and/or O interface 805, and the components include: an input unit 806, such as a keyboard, a mouse, etc.; an output unit 807, such as various types of displays, speakers, etc.; a storage unit 808, such as a magnetic disk, an optical disc, etc.; and a communication unit 809, such as a network card, a modem, a wireless communication transceiver, etc. The communication unit 809 allows the device 800 to exchange information and/or data with other devices over a computer network such as the Internet and/or various telecommunication networks.

The various methods or processes described above may be performed by the CPU and/or GPU 801. For example, in some embodiments, the method may be implemented as a computer software program, which is tangibly contained in a machine-readable medium, such as the storage unit 808. In some embodiments, part or entirety of the computer program may be loaded and/or installed into the device 800 via the ROM 802 and/or the communication unit 809. When the computer program is loaded into the RAM 803 and executed by the CPU and/or GPU 801, one or more steps or actions in the method or process described above may be executed.

In some embodiments, the methods and processes described above may be implemented as a computer program product. The computer program product may include a computer-readable storage medium having computer-readable program instructions loaded thereon for performing various aspects of the present disclosure.

The computer-readable storage medium may be a tangible device that may hold and store instructions used by an instruction execution device. The computer-readable storage medium may be, for example, but is not limited to, an electrical storage device, a magnetic storage device, an optical storage device, an electromagnetic storage device, a semiconductor storage device, or any suitable combination of the above. More specific examples (a non-exhaustive list) of the computer-readable storage medium include: a portable computer diskette, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanically encoded device, such as a punched card or a raised structure in a groove with instructions stored thereon, and any suitable combination of the above. The computer-readable storage medium used herein is not interpreted as an instantaneous signal itself, such as a radio wave or other freely propagating electromagnetic wave, an electromagnetic wave propagating through a waveguide or other transmission medium (for example, a light pulse through an optical fiber cable), or an electrical signal transmitted through a wire.

The computer-readable program instructions described herein may be downloaded from the computer-readable storage medium to various computing and/or processing devices, or downloaded to an external computer or an external storage device through a network, such as the Internet, a local area network, a wide area network, and/or a wireless network. The network may include a copper transmission cable, an optical fiber transmission, a wireless transmission, a router, a firewall, a switch, a gateway computer, and/or an edge server. A network adapter card or a network interface in each computing and/or processing device receives the computer-readable program instructions from the network and forwards the computer-readable program instructions for storage in the computer-readable storage medium in each computing and/or processing device.

The computer program instructions for performing the operations of the present disclosure may be assembly instructions, instruction set architecture (ISA) instructions, machine instructions, machine-related instructions, microcode, firmware instructions, state setting data, or source code or object code written in any combination of one or more programming languages, the programming languages including object-oriented programming languages and conventional procedural programming languages. The computer-readable program instructions may be executed entirely on a user computer, partly executed on a user computer, executed as an independent software package, partly executed on a user computer and partly executed on a remote computer, or entirely executed on a remote computer or a server. In the case involving the remote computer, the remote computer may be connected to the user computer through any kind of network, including a local area network (LAN) or a wide area network (WAN), or may be connected to an external computer (for example, connected through the Internet with the aid of an Internet service provider). In some embodiments, by personalizing an electronic circuit, such as a programmable logic circuit, a field programmable gate array (FPGA) or a programmable logic array (PLA), with the aid of state information of the computer-readable program instructions, the electronic circuit may execute the computer-readable program instructions, to implement various aspects of the present disclosure.

These computer-readable program instructions may be provided to a processing unit of a general-purpose computer, a dedicated computer, or other programmable data processing apparatus to produce a machine, so that these instructions, when executed by the processing unit of the computer or other programmable data processing apparatus, produce an apparatus for implementing the functions and/or actions specified in one or more blocks in the flowcharts and/or block diagrams. These computer-readable program instructions may also be stored in the computer-readable storage medium, and these instructions enable the computer, the programmable data processing apparatus, and/or other devices to work in a specific manner, so that the computer-readable medium having the instructions stored therein includes a manufactured product, which includes instructions for implementing various aspects of the functions and/or actions specified in one or more blocks in the flowcharts and/or block diagrams.

The computer-readable program instructions may also be loaded onto a computer, other programmable data processing apparatus, or other devices, so that a series of operation steps are executed on the computer, other programmable data processing apparatus, or other devices, to produce a computer-implemented process, so that the instructions executed on the computer, other programmable data processing apparatus, or other devices implement the functions and/or actions specified in one or more blocks in the flowcharts and/or block diagrams.

The flowcharts and block diagrams in the drawings show the possibly implemented architectures, functions, and operations of the device, the method, and the computer program product according to a plurality of embodiments of the present disclosure. In this regard, each block in the flowchart or block diagram may represent a module, program segment, or part of an instruction, which contains one or more executable instructions for implementing the specified logical functions. In some alternative implementations, the functions marked in the blocks may also occur in an order different from that marked in the drawings. For example, two consecutive blocks may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented with a dedicated hardware-based system that executes specified functions or actions, or may be implemented with a combination of dedicated hardware and computer instructions.

The embodiments of the present disclosure have been described above, and the above descriptions are exemplary, non-exhaustive, and are not limited to the disclosed embodiments. Without departing from the scope and spirit of the illustrated embodiments, many modifications and changes will be apparent to those of ordinary skill in the art. The terms used herein are intended to best explain the principles of the embodiments, practical applications, or technical improvements to the technology in the market, or to enable other persons of ordinary skill in the art to understand the embodiments disclosed herein.

Some example implementations of the present disclosure are listed below.

Example 1. A media generation method, including:
presenting, on a first interface including a map, a trip including a plurality of nodes, the trip being presented on the map, each of the plurality of nodes being associated with a corresponding node location, node time, and/or creation content, the creation content including an image, an audio, and/or a video; and
displaying first creation content corresponding to a first node of the plurality of nodes in response to a user selecting the first node.

Example 2. The method of Example 1, further including:
displaying, on a second interface, a plurality of trips including the trip; and
displaying the trip on the first interface in response to the user selecting the trip on the second interface.

Example 3. The method of any one of Examples 1-2, further including:
returning to the second interface displaying the plurality of trips in response to a touch operation of the user on a return control.

Example 4. The method of any one of Examples 1-3, where presenting a trip including a plurality of nodes on a map includes:
generating, based on corresponding creation content of each node, a thumbnail representing the creation content; and
displaying, on the first interface, the corresponding thumbnail near each node.

Example 5. The method of any one of Examples 1-4, further including:
receiving a scaling of the map by a user; and
displaying, in response to receiving the scaling, the scaled map, the trip, and/or the thumbnail.

Example 6. The method of any one of Examples 1-5, further including:
receiving a moving of the map by a user; and
displaying, in response to receiving the moving, the moved map, the trip, and/or the thumbnail.

Example 7. The method of any one of Examples 1-6, further including:
displaying second creation content corresponding to a second node of the first interface in response to a user selecting the second node.

Example 8. The method of any one of Examples 1-7, further including:
generating the first node based on a first node location, a first node time, and the first creation content;
generating a second node based on a second node location, a second node time, and second creation content, the first creation content and the second creation content each including an image, an audio, and/or a video; and
generating, based at least on the first node and the second node, the trip presented on the first interface.

Example 9. The method of any one of Examples 1-8, further including:
obtaining an image and/or a video imported by a user; and
determining, based on metadata of the imported image and/or video, the first node location and/or the first node time.

Example 10. The method of any one of Examples 1-9, further including:
receiving a time and/or a place determined by a user; and
determining, based on the determined time and/or place, the first node location and/or the first node time.

Example 11. The method of any one of Examples 1-10, further including:
displaying a preview trip including the first node and the second node in response to a touch operation of a user on a preview control.

Example 12. The method of any one of Examples 1-11, further including:
publishing a trip including the first node and the second node in response to a touch operation of a user on a publish control.

Example 13. The method of any one of Examples 1-12, where the trip is a first trip, and the method further includes:
determining whether a route of the first trip and a route of a second trip in a recommendation pool of a server have a same place at a same time; and
recommending the second trip to the user in response to determining that the route of the first trip and the route of the second trip have the same place at the same time.

Example 14. A media generation apparatus, including:
a trip display module configured to present, on a first interface including a map, a trip including a plurality of nodes, the trip being presented on the map, each of the plurality of nodes being associated with a corresponding node location, node time, and/or creation content, the creation content including an image, an audio, and/or a video; and
a first creation content display module configured to display first creation content corresponding to a first node of the plurality of nodes in response to a user selecting the first node.

Example 15. The apparatus of Example 14, where the trip display module includes:
a first trip display module configured to display, on a second interface, a plurality of trips including the trip; and
a second trip display module configured to display the trip on the first interface in response to the user selecting the trip on the second interface.

Example 16. The apparatus of any one of Examples 14-15, further including:
a return module configured to return to the second interface displaying the plurality of trips in response to a touch operation of the user on a return control.

Example 17. The apparatus of any one of Examples 14-16, where the trip display module further includes:
a thumbnail generation module configured to generate, based on corresponding creation content of each node, a thumbnail representing the creation content; and
a thumbnail display module configured to display, on the first interface, the corresponding thumbnail near each node.

Example 18. The apparatus of any one of Examples 14-17, further including:
a scaling reception module configured to receive a scaling of the map by a user; and
a scaling display module configured to display, in response to receiving the scaling, the scaled map, the trip, and/or the thumbnail.

Example 19. The apparatus of any one of Examples 14-18, further including:
a moving reception module configured to receive a moving of the map by a user; and
a moving display module configured to display, in response to receiving the moving, the moved map, the trip, and/or the thumbnail.

Example 20. The apparatus of any one of Examples 14-19, further including:
a second creation content display module configured to display second creation content corresponding to a second node of the first interface in response to a user selecting the second node.

Example 21. The apparatus of any one of Examples 14-20, further including:
a first node generation module configured to generate the first node based on a first node location, a first node time, and the first creation content;
a second node generation module configured to generate a second node based on a second node location, a second node time, and second creation content, the first creation content and the second creation content each including an image, an audio, and/or a video; and
a trip generation module configured to generate, based at least on the first node and the second node, the trip presented on the first interface.

Example 22. The apparatus of any one of Examples 14-21, further including:
an image obtaining module configured to obtain an image and/or a video imported by a user; and
a first node determination module configured to determine, based on metadata of the imported image and/or video, the first node location and the first node time.

Example 23. The apparatus of any one of Examples 14-22, further including:
a time and place reception module configured to receive a time and/or a place determined by a user; and
a second node determination module configured to determine, based on the determined time and/or place, the first node location and/or the first node time.

Example 24. The apparatus of any one of Examples 14-23, further including:
a preview trip display module configured to display a preview trip including the first node and the second node in response to a touch operation of a user on a preview control.

Example 25. The apparatus of any one of Examples 14-24, further including:
a trip publishing module configured to publish a trip including the first node and the second node in response to a touch operation of a user on a publish control.

Example 26. The apparatus of any one of Examples 14-25, where the trip is a first trip, and the method further includes:
a trip intersection determination module configured to determine whether a route of the first trip and a route of a second trip in a recommendation pool of a server have a same place at a same time; and
a trip recommendation module configured to recommend the second trip to the user in response to determining that the route of the first trip and the route of the second trip have the same place at the same time.

Example 27. An electronic device, including:
a processor; and
a memory coupled with the processor, the memory having instructions stored therein, the instructions, when executed by the processor, causing the electronic device to perform actions for performing the method of any one of Examples 1-13.

Example 28. A computer-readable storage medium having computer-executable instructions stored thereon, where the computer-executable instructions are executed by a processor to implement the method of any one of claims 1-13.

Example 29. A computer program product tangibly stored on a computer-readable medium and including computer-executable instructions that, when executed by a device, cause the device to perform the method of any one of Examples 1-13.

Although the present disclosure has been described in a language specific to structural features and/or logical actions of the method, it should be understood that the subject matter defined in the appended claims is not necessarily limited to the specific features or actions described above. Rather, the specific features and actions described above are merely example forms for implementing the claims.

## Claims

1. A media generation method, comprising:
presenting, on a first interface comprising a map, a trip comprising a plurality of nodes, the trip being presented on the map, each of the plurality of nodes being associated with a corresponding node location, node time, and/or creation content, the creation content comprising an image, an audio, and/or a video; and
displaying first creation content corresponding to a first node of the plurality of nodes in response to a user selecting the first node.

2. The method of claim 1, further comprising:
displaying, on a second interface, a plurality of trips comprising the trip; and
displaying the trip on the first interface in response to the user selecting the trip on the second interface.

3. The method of claim 2, further comprising:
returning to display the second interface comprising the plurality of trips in response to a touch operation by the user on a return control.

4. The method of claim 1, further comprising:
generating, based on corresponding creation content of each node, a thumbnail representing the creation content; and
displaying, on the first interface and near each node, a corresponding thumbnail.

5. The method of claim 4, further comprising:
receiving a scaling of the map by the user; and
displaying, in response to receiving the scaling, a scaled map, the trip, and/or the thumbnail.

6. The method of claim 5, further comprising:
receiving a moving of the map by the user; and
displaying, in response to receiving the moving, a moved map, the trip, and/or the thumbnail.

7. The method of any of claims 1-5, further comprising:
displaying second creation content corresponding to a second node on the first interface in response to the user selecting the second node.

8. The method of claim 1, further comprising:
generating the first node based on a first node location, a first node time, and the first creation content;
generating a second node based on a second node location, a second node time, and second creation content, the first creation content and the second creation content respectively comprising a image, an audio, and/or a video; and
generating, based at least on the first node and the second node, the trip presented on the first interface.

9. The method of claim 8, further comprising:
obtaining an image, an audio, and/or a video imported by the user; and
determining, based on metadata of the imported image, audio, and/or video, the first node location and the first node time.

10. The method of claim 8, further comprising:
receiving a time and/or a place determined by the user; and
determining, based on the determined time and/or place, the first node location and/or the first node time.

11. The method of claim 9, further comprising:
displaying a preview trip comprising the first node and the second node in response to a touch operation by the user on a preview control.

12. The method of claim 9, further comprising:
publishing a trip comprising the first node and the second node in response to a touch operation by the user on a publishing control.

13. The method of any of claims 9-12, wherein the trip is a first trip, and the method further comprises:
determining whether a route of the first trip and a route of a second trip in a recommendation pool of a server have a same place at a same time; and
recommending the second trip to the user in response to determining that the route of the first trip and the route of the second trip have the same place at the same time.

14. A media generation apparatus, comprising:
a trip display module configured to present, on a first interface comprising a map, a trip comprising a plurality of nodes, the trip being presented on the map, each of the plurality of nodes being associated with a corresponding node location, node time, and/or creation content, the creation content comprising an image, an audio, and/or a video; and
a first creation content display module configured to display first creation content corresponding to a first node of the plurality of nodes in response to a user selecting the first node.

15. An electronic device, comprising:
a processor; and
a memory coupled with the processor, the memory having instructions stored therein, and the instructions, when executed by the processor, causing the electronic device to perform the method of any of claims 1-13.

16. A computer-readable storage medium having computer-executable instructions stored thereon, wherein the computer-executable instructions are executed by a processor to implement the method of any of claims 1-13.
